# EUROPÄISCHE PATENTSCHRIFT

(11) **EP 0 492 068 B1**
(45) Veröffentlichungstag und Bekanntmachung des Hinweises auf die Patenterteilung: **15.02.1995**
(21) Anmeldenummer: 91116918.3
(22) Anmeldetag: 04.10.1991
(51) Int. Cl.: B60T 17/02, B60T 15/48

(54) **Druckluftanlage mit einem Hochdruckteil und einem Niederdruckteil**
Compressed air system with a high pressure part and a low pressure part
Installation à air comprimé munie d'une partie à haute pression et d'une partie à basse pression

(30) Priorität: 24.12.1990 DE 4041710
(43) Veröffentlichungstag der Anmeldung: 01.07.1992
(73) Patentinhaber: WABCO GmbH, 30453 Hannover (DE)
(72) Erfinder: Deike, Karl-Heinz, W-3017 Pattensen 5 (DE)
(74) Vertreter: Schrödter, Manfred, Dipl.-Ing.

(56) Entgegenhaltungen:
- EP-A- 0 104 312
- DE-A- 2 951 305
- DE-C- 1 208 207

## Beschreibung

Die Erfindung betrifft Druckluftanlagen mit einem Hochdruckteil, einem Niederdruckteil und einem Druckerzeuger nach den Oberbegriffen der Patentansprüche 1 und 7.

Derartige Druckluftanlagen sind in allen technischen Gebieten, die Druckluft zu Steuerungs- und Betätigungszwecken einsetzen, gebräuchlich. Beispielsweise seien erwähnt die technischen Gebiete der Fabrikanlagen, der Schiffsbetriebsanlagen, der Schienenfahrzeuge und der schienenungebunden Nutzfahrzeuge. Eine derartige Druckluftanlage zeichnet sich dadurch aus, daß in ihrem Hochdruckteil und ihrem Niederdruckteil Verbraucher eingesetzt sind, die für unterschiedliche Druckniveaus ausgelegt sind.

Wird unterstellt, daß in dem in der FR-A-23 08 529 erwähnten "Régulateur de pression" eine eine Schaltkammer enthaltende Abschalteinrichtung und eine Govenorventileinrichtung bzw. eine Abschalteinrichtung zur Abschaltung des Druckerzeugers beim Auftreten des Hochdrucks im Hochdruckteil verkörpert sind, so zeigt diese Schrift Druckluftanlagen der eingangs erwähnten Arten.

Eine übliche Druckbegrenzungsventileinrichtung, wie sie beispielsweise in der WABCO-Druckschrift "Druckbegrenzungsventil 475 010", Ausgabe Oktober 1975, beschrieben ist, hat die bauartbedingte Eigenschaft, daß sie sich nicht übergangslos schließt, wenn ihr Ausgangsdruck den Wert des eingestellten Begrenzungsdrucks erreicht, sondern schon bei Annäherung ihres Ausgangsdrucks an diesen Wert ihren Durchlaßquerschnitt verengt, also "schleichend" schließt. Dadurch kann bei bestimmten Betriebsbedingungen an ihrem Eingang ein Stau entstehen, der in dem Hochdruckteil eine Drucksteigerung auf den Wert des Hochdrucks, dadurch ein Öffnen der Govenorventileinrichtung bzw. eine Betätigung der Abschalteinrichtung und infolgedessen eine Abschaltung des Druckerzeugers zur Folge hat, obwohl der Wert des Niederdrucks in dem Niederdruckteil noch nicht erreicht ist. Die anschließende Nachströmung aus dem Hochdruckteil durch den verengten Durchlaßquerschnitt der Druckbegrenzungsventileinrichtung hindurch in den Niederdruckteil kann zur Folge haben, daß der Druck im Hochdruckteil unter den Schließdruck der Govenorventileinrichtung, der auch "Einschaltdruck der Druckluftanlage" genannt wird, fällt bzw. die Abschalteinrichtung rückbetätigt wird mit dem Ergebnis, daß der Druckerzeuger wieder zugeschaltet wird. Dieser Vorgang kann sich je nach Einsatzbedingungen mehrmals wiederholen, also zu mehrmaliger Funktion der erwähnten Einrichtungen mit mehrmaligem Zu- und Abschalten des Druckerzeugers führen. Diese Erscheinung ist nachteilig, weil sie erhöhte Beanspruchungen der beteiligten Geräte und eine erhöhte Geräuschbildung mit sich bringt.

Der Erfindung liegt die Aufgabe zugrunde, Druckluftanlagen der eingangs genannten Arten mit einfachen Mitteln derart auszubilden, daß bei Annäherung des Drucks im Niederdruckteil an den Wert des Niederdruckes die Gefahr mehrmaligen Zu- und Abschaltens des Druckerzeugers und mehrmaliger Betätigung der daran beteiligten Einrichtungen beseitigt wird.

Diese Aufgabe wird durch die in den Patentansprüchen 1 und 7 angegebene Erfindung gelöst. Vorteilhafte Ausgestaltungen und Weiterbildungen sind in den Unteransprüchen angegeben.

Es ist üblich, die die Schaltkammer enthaltende Abschalteinrichtung gemeinsam mit der Govenorventileinrichtung sowie die Abschalteinrichtung laut den Patentansprüchen 1 bzw. 7 als "Druckregeleinrichtung" zu bezeichnen. Es ist weiter üblich, die Abschalteinrichtung und die Govenorventileinrichtung zu einem "Druckregler" zusammenzufassen. Hinsichtlich der Abschalteinrichtung laut Patentanspruch 7 ist es üblich, deren Bestandteile getrennt oder zusammengefaßt darzustellen. Es ist auch bekannt, die Druckregeleinrichtung ganz oder teilweise in den Druckerzeuger zu integrieren.

Es ist ferner üblich, zwecks Trocknung und Reinigung der Druckluft zwischen dem Druckerzeuger und den genannten Anlagenteilen einen Lufttrockner anzuordnen. Für dessen Anordnung relativ zu der Druckregeleinrichtung bzw. zu ihren Bestandteilen gelten bekannte Regeln. Es ist bekannt, in diesem Falle die Druckregeleinrichtung ganz oder teilweise in den Lufttrockner zu integrieren.

Weitere Vorteile der Erfindung ergeben sich aus deren nunmehr folgender Erläuterung anhand von in Figuren dargestellten Ausführungsbeispielen. Unter durchgehender Verwendung einheitlicher Bezugszeichen für Bauteile mit gleichen Funktionen zeigen:

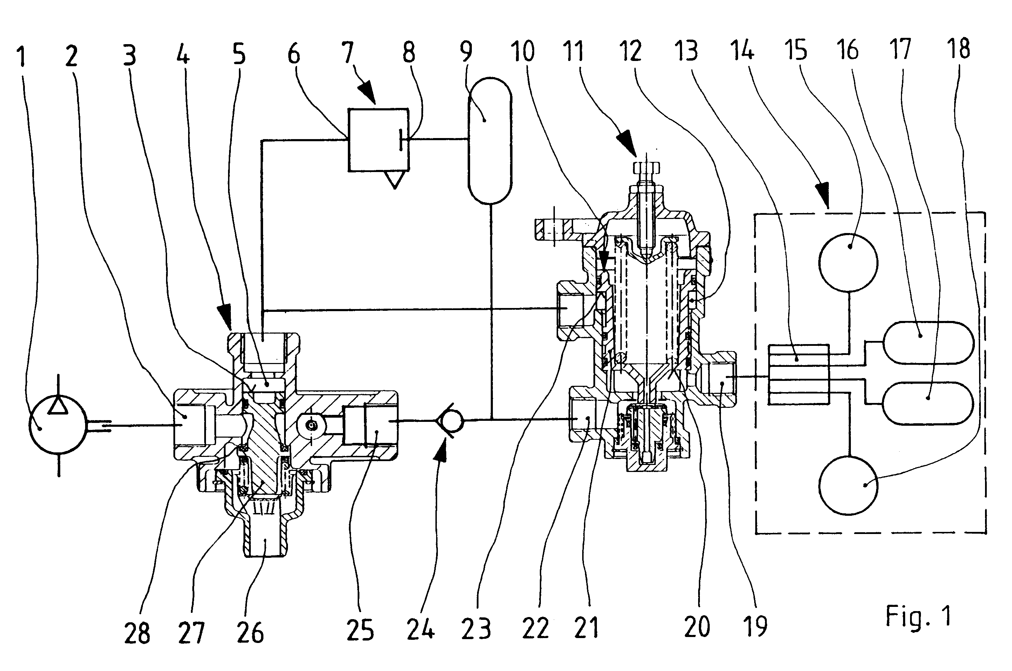

- **Fig.1**: schematisch die Grundausführung einer Druckluftanlage mit Hochdruckteil und Niederdruckteil,
- **Fig.2**:

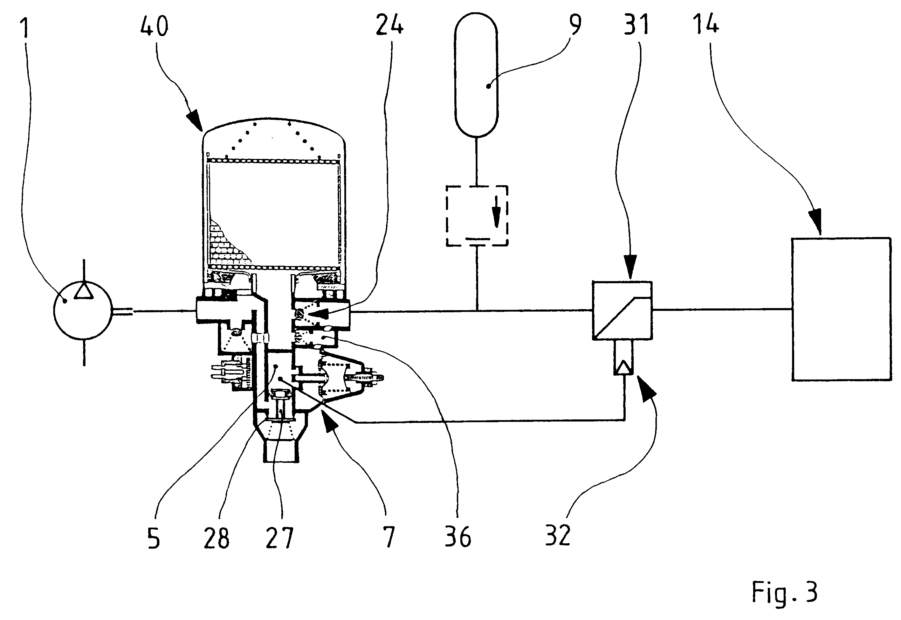

- **Fig.3**: Fortbildungen der Druckluftanlage nach Fig.1,
- **Fig.4**:

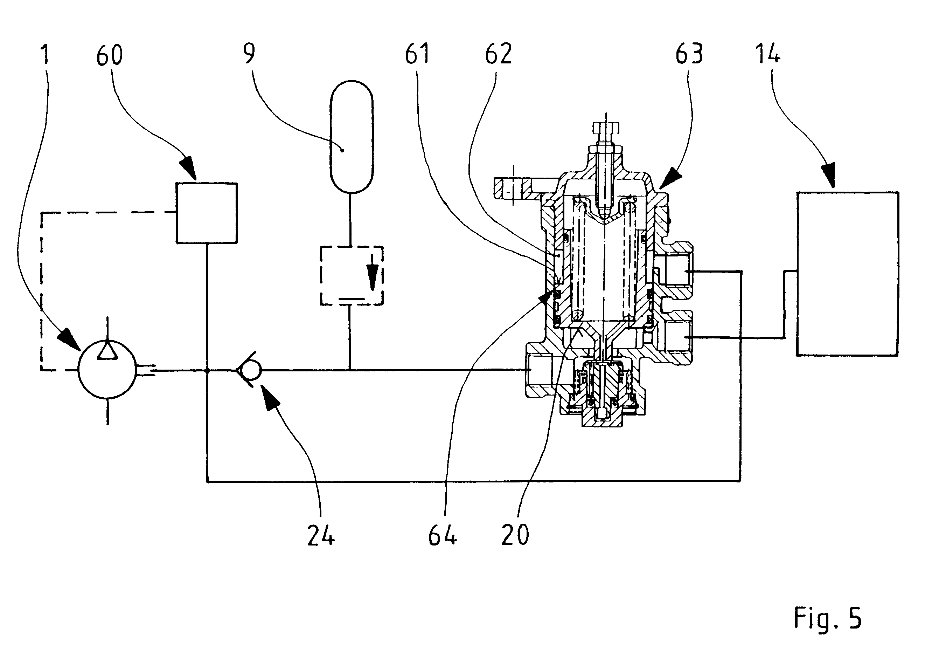

- **Fig.5**: schematisch die Grundausführung einer anderen Druckluftanlage mit Hochdruckteil und Niederdruckteil.

Die in Fig.1 dargestellte Druckluftanlage enthält einen Hochdruckteil (9) und einen Niederdruckteil (14). Der Niederdruckteil (14) besteht aus mehreren, schematisch durch ihre Vorratsbehälter (15, 16, 17, 18) angedeuteten Verbraucherkreisen, die in bekannter Weise durch eine Schutzventileinrichtung (13) gegeneinander und gegenüber dem Hochdruckteil (9) abgesichert sind. Typisches Einsatzgebiet einer solchen Druckluftanlage sind schienenungebundene Nutzfahrzeuge, in denen der Niederdruckteil (14) die Bremsanlage bildet und der Hochdruckteil (9) der Betätigung von Nebenverbrauchern, z.B. einer Niveau-Einstelleinrichtung, dient.

Der Druckluftversorgung der Druckluftanlage dient ein Druckerzeuger (1) üblicher Bauart.

An den Druckerzeuger (1), genauer: an dessen Ausgang, ist der Eingang (2) einer Abschalteinrichtung (4) angeschlossen, an deren Ausgang (25) über ein Rückschlagventil (24) der Hochdruckteil (9) angeschlossen ist. Die Abschalteinrichtung (4) weist einen Strömungsweg von ihrem Eingang (2) zu ihrem Ausgang (25) und einen parallel dazu angeordneten Strömungsweg von dem Eingang (2) zu einem in die Umgebung mündenden Entlüftungsauslaß (26) auf. Die Abschalteinrichtung (4) stellt eine druckabhängige Absperreinrichtung für den zuletzt erwähnten Strömungsweg dar. Zu diesem Zweck weist sie in diesem Strömungsweg ein aus einem gehäusefesten Ventilsitz (28) und einem Ventilglied (27) gebildetes Auslaßventil (27, 28) auf. Das Ventilglied (27) ist durch eine nicht näher bezeichnete Feder in Schließrichtung des Auslaßventils (27, 28), d.h. in der Darstellung aufwärts, vorgespannt. An seinem der Feder gegenüberliegenden Ende weist das Ventilglied (27) eine Kolbenfläche (3) auf, mit der es eine Schaltkammer (5) derart begrenzt, daß es bei Druckbeaufschlagung dieser Schaltkammer (5) gegen die Kraft der Feder in Öffnungsrichtung des Auslaßventils (27, 28), d.h. in der Darstellung abwärts, bewegt wird.

An den Hochdruckteil (9) ist der Eingang (8) einer Govenorventileinrichtung (7) angeschlossen, wie sie beispielsweise aus der Clayton Dewandre Druckschrift "Air Pressure Equipment Govenor Valves", Drucknummer TP 44 B 2000/11/71, bekannt ist. Deren Ausgang (6) - in der Druckschrift "to compressor unloader port" - ist an die Schaltkammer (5) der Abschalteinrichtung (4) angeschlossen. Die Govenorventileinrichtung (7) ist auf den Wert des Hochdrucks eingestellt. Sie bildet mit der Abschalteinrichtung (4) eine Druckregeleinrichtung (4, 7) für den Hochdruck.

Die Versorgung des Niederdruckteils (14) mit Druckluft erfolgt über eine Druckbegrenzungsventileinrichtung (11). Deren Eingang (22) ist, über das Rückschlagventil (24), ebenfalls an den Ausgang (25) der Abschalteinrichtung (4) angeschlossen, und deren Ausgang (19) ist an den Niederdruckteil (14) angeschlossen. Die Druckbegrenzungsventileinrichtung (11) entspricht in ihrem Grundaufbau sowie in ihren Grundfunktionen einer bekannten Bauart, wie sie beispielsweise in der WABCO-Druckschrift "Druckbegrenzungsventil 475 010", Ausgabe Oktober 1975, beschrieben ist. Wie im einzelnen aus der WABCO-Druckschrift hervorgeht, weist eine solche Druckbegrenzungsventileinrichtung ein den Strömungsweg von ihrem Eingang zu ihrem Ausgang beherrschendes Einlaßventil und ein das Einlaßventil betätigendes Kolbenglied auf, welches in Öffnungsrichtung des Einlaßventils von einer Regelfeder und in Schließrichtung des Einlaßventils auf einer Kolbenfläche von dem Ausgangsdruck beaufschlagt ist. Die Druckbegrenzungswirkung tritt dadurch ein, daß sich das Kolbenglied, wenn der Ausgangsdruck den Wert des Begrenzungsdrucks erreicht hat, gegen die Kraft der Feder bewegt hat und dadurch das Schließen des Einlaßventils bewirkt hat. Eine solche Druckbegrenzungsventileinrichtung hat auch ein Auslaßventil, worauf jedoch im vorliegenden Zusammenhang nicht näher eingegangen werden braucht.

Im bisher beschriebenen Umfang, der einer herkömmlichen Druckluftanlage entspricht, arbeitet das Ausführungsbeispiel wie folgt.

Beim Auffüllen der leeren oder bis unter den Wert des Niederdrucks teilweise entleerten Druckluftanlage fördert der Druckerzeuger (1) zunächst bei geschlossenem Auslaßventil (27, 28) der Abschalteinrichtung (4) und geschlossener Govenorventileinrichtung (7), aber geöffneter Druckbegrenzungsventileinrichtung (11) Druckluft in beide Anlagenteile. Bauartbedingt, d.h. konkret bedingt durch die unvermeidbare Charakteristik der Regelfeder, setzt sich das Kolbenglied der Druckbegrenzungsventileinrichtung (11) schon in Schließrichtung des Einlaßventils in Bewegung, wenn der Ausgangsdruck, d.h. der Druck im Niederdruckteil (14), sich dem Wert des eingestellten Begrenzungsdrucks nähert. Die dadurch verursachte Verengung des Durchlaßquerschnitts des Einlaßventils führt, wenn die Fördermenge des Druckerzeugers (1) infolge dieser Verengung von den Anlagenteilen nicht geschluckt werden kann, zu einem Stau, aufgrund dessen der Druck am Eingang (22) der Druckbegrenzungsventileinrichtung (11) und damit im Hochdruckteil (9) auf den Wert des Hochdrucks, welcher auch "Abschaltdruck der Druckluftanlage" genannt wird, ansteigen kann. In diesem Fall öffnet die Govenorventileinrichtung (7), woraufhin die Schaltkammer (5) der Abschalteinrichtung (4) mit Druck (vom Wert des Hochdrucks) beaufschlagt und deren Auslaßventil (27, 28) geöffnet wird. Der Druckerzeuger (1) fördert nunmehr im wesentlichen nur gegen den Druck der Umgebung durch das Auslaßventil (27, 28) in diese, ist mithin abgeschaltet. Das Rückschlagventil (24) verhindert in diesem Betriebszustand einen Rückfluß aus den Anlagenteilen (9, 14).

Nach der Abschaltung des Druckerzeugers (1) wird durch den verengten Durchlaßquerschnitt der Druckbegrenzungsventileinrichtung (11) Druckluft aus dem Hochdruckteil (9) in den Niederdruckteil (14) nachgefördert. Fällt dadurch der Druck im Hochdruckteil (9) unter den Schließdruck der Govenorventileinrichtung (7), welcher auch "Einschaltdruck der Druckluftanlage" genannt wird, so schließt sich diese, entlüftet dabei die Schaltkammer (5) der Abschalteinrichtung (4), führt dadurch zum Schließen von deren Auslaßventil (27, 28) und damit zum Zuschalten des Druckerzeugers (1). Dessen Fördermenge können die Anlagenteile (9, 14) jedoch nicht schlucken, weshalb sich der soeben beschriebene Vorgang wiederholt. Dies kann mehrmals geschehen, bevor der Druck im Niederdruckteil (14) den Wert des Niederdrucks erreicht hat und das Einlaßventil der Druckbegrenzungsventileinrichtung (11) vollständig und sicher geschlossen ist. Die, gegebenenfalls mehrmalige, Wiederholung des beschriebenen Vorgangs hat die weiter oben erwähnten Nachteile zur Folge.

Zur Vermeidung ihres geschilderten "schleichenden Schließens" und der daraus folgenden Nachteile ist die Druckbegrenzungsventileinrichtung (11) mit einer an die Schaltkammer (5) der Abschalteinrichtung (4) angeschlossenen druckbetätigten Schließeinrichtung (10) versehen. Diese bewirkt bei Druckbeaufschlagung der Schaltkammer (5) ein schnelles und sicheres Schließen des Einlaßventils der Druckbegrenzungsventileinrichtung (11).

Die Schließeinrichtung (10) kann auf jede geeignete Art ausgebildet sein. Im Ausführungsbeispiel ist sie dadurch realisiert, daß das Kolbenglied (21) eine seiner Kolbenfläche (20) gleichgerichtete Stufenfläche (23) aufweist, die eine mit der Schaltkammer (5) der Abschalteinrichtung (4) verbundene Kammer (12) begrenzt.

Erreicht beim "schleichenden Schließen" der Druckbegrenzungsventileinrichtung (11) der Druck im Hochdruckteil (9) den Wert des Hochdrucks, so werden außer der Schaltkammer (5) der Abschalteinrichtung (4) auch die Kammer (12) und damit die Stufenfläche (23) der Schließeinrichtung (10) vergleichsweise schlagartig mit diesem Druck beaufschlagt mit dem Ergebnis, daß am Kolbenglied (21) vergleichsweise schlagartig eine zusätzliche Druckkraft in Schließrichtung des Einlaßventils entsteht, die zum sofortigen und sicheren Schließen desselben und damit der Druckbegrenzungsventileinrichtung (11) führt. Die oben erwähnte Nachförderung aus dem Hochdruckteil (9) in den Niederdruckteil (14) bei abgeschaltetem Druckerzeuger (1), die die erwähnten nachteiligen Vorgänge zur Folge hat, wird dadurch unterbunden.

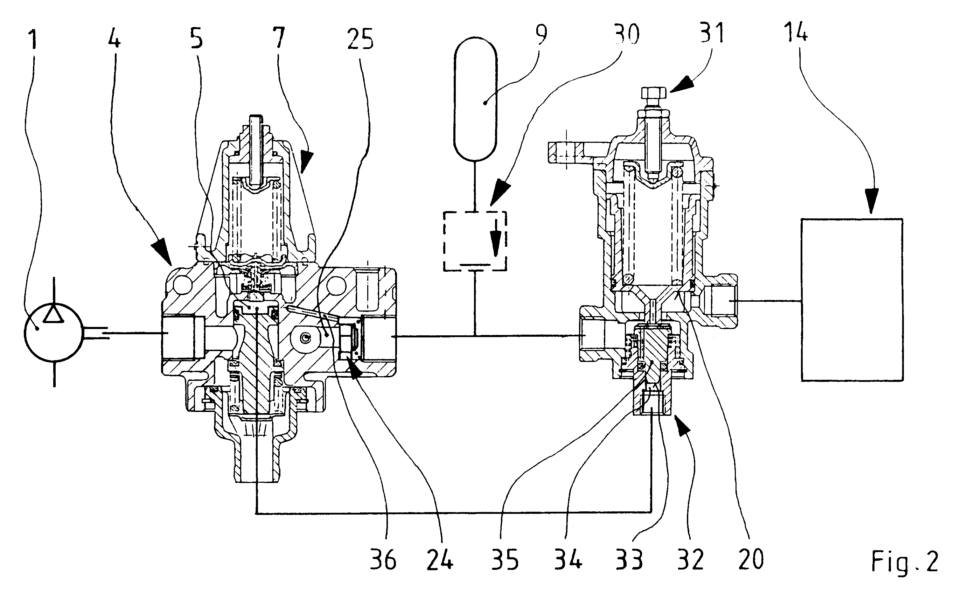

Im Ausführungsbeispiel nach Fig.2 sind die Abschalteinrichtung (4) und die Govenorventileinrichtung (7) zu einem Druckregler vereinigt, wie er beispielsweise aus der WABCO-Druckschrift "Beschreibung der Druckluftgeräte in Fahrzeugen", Ausgabe März 1989, Seite 18, bekannt ist. Die im früheren Ausführungsbeispiel frei verlaufende Verbindung zwischen der Govenorventileinrichtung (7) und der Abschaltkammer (5) ist hier durch einen Gehäusekanal (36) ersetzt. In diesen Druckregler ist auch das Rückschlagventil (24) integriert.

Die Schließeinrichtung (32) der hier mit (31) bezeichneten Druckbegrenzungsventileinrichtung macht von der Tatsache Gebrauch, daß bekannte Druckbegrenzungsventileinrichtungen einen Ventilkörper aufweisen, mit dem das Kolbenglied zusammenwirkt, dergestalt, daß es bei geöffnetem Einlaßventil bis zu dessen vollständigem Schließen kraftschlüssig mit dem Ventilkörper in Verbindung steht. Die Schließeinrichtung (32) ist hier dadurch gebildet, daß der Ventilkörper (35) an seinem dem Kolbenglied abgewandten Ende mit einer Kolbenfläche (33) versehen ist, die der Kolbenfläche (20) des Kolbenglieds gleichgerichtet ist. Die Kolbenfläche (33) des Ventilglieds (35) begrenzt eine Kammer (34), die an die Schaltkammer (5) des Druckreglers angeschlossen ist. Der Ventilkörper (35) muß in diesem Fall gegenüber der Kammer (34) abgedichtet sein, damit die Bildung seiner Kolbenfläche (33) möglich ist.

Beim Anstieg des Drucks im Hochdruckteil (9) auf den Wert des Hochdrucks werden in diesem Fall die Kammer (34) und die Kolbenfläche (33) des Ventilglieds (35) vergleichsweise schlagartig mit Druck (vom Wert des Hochdrucks) beaufschlagt, wodurch das Ventilglied (35) die zum sofortigen und sicheren Schließen des Einlaßventils und damit der Druckbegrenzungsventileinrichtung (31) führende zusätzliche Druckkraft auf das Kolbenglied ausübt.

In diesem Ausführungsbeispiel ist als zusätzliche Fortbildungsmöglichkeit gestrichelt ein Überströmventil (30) mit begrenzter Rückströmung in der Verbindung zwischen dem Ausgang des Druckreglers, d.h. auch der Abschalteinrichtung (4) und dem Hochdruckteil (9) dargestellt. Der Öffnungsdruck dieses Überströmventils (30) muß geringer als der Wert des Hochdrucks eingestellt sein, um die Befüllung des Hochdruckteils (9) zu ermöglichen. Zweckmäßigerweise wird dieser Öffnungsdruck auf den Wert des Niederdrucks oder darunter eingestellt. Das Überströmventil (30) besorgt, daß bis zum Wert seines Öffnungsdruckes vorrangig der Niederdruckteil (14) aufgefüllt wird. Die begrenzte Rückströmung des Überströmventils (30) ermöglicht, daß bei defektem oder stillgesetztem Druckerzeuger (1) bis zum Schließdruck des Überströmventils (30) der Niederdruckteil (14) Druckluft aus dem Hochdruckteil (9) ziehen kann und erhöht dadurch die Notbetriebskapazität des Niederdruckteils (14). Unter Verzicht auf diesen Vorteil kann als Überströmventil (30) auch ein solches ohne Rückströmung eingesetzt werden.

Das Überströmventil (30) entspricht einer bekannten Bauart, wie sie beispielsweise in der WABCO-Druckschrift "Überströmventil 434 100" Ausgabe August 1973, beschrieben ist.

Fig.3 zeigt eine Fortbildung der Druckluftanlage, die in der Verbindung zwischen dem Druckerzeuger (1) und den genannten Anlagenteilen (9, 14) einen Lufttrockner (40) aufweist, in den der Druckregler nach Fig.2 und damit auch die Druckregeleinrichtung nach Fig.1 sowie das Rückschlagventil (24) integriert sind.

Der Lufttrockner (40) entspricht einer bekannten Bauart, wie sie beispielsweise in der WABCO-Druckschrift "Aus unserer Entwicklung 1983", Seiten 32 und 33, beschrieben ist. In nicht näher dargestellter Weise kann in den Lufttrockner auch nur ein Bestandteil der Druckregeleinrichtung integriert sein. Auch ist die Anordnung eines von der Druckregeleinrichtung völlig selbständigen Lufttrockners möglich.

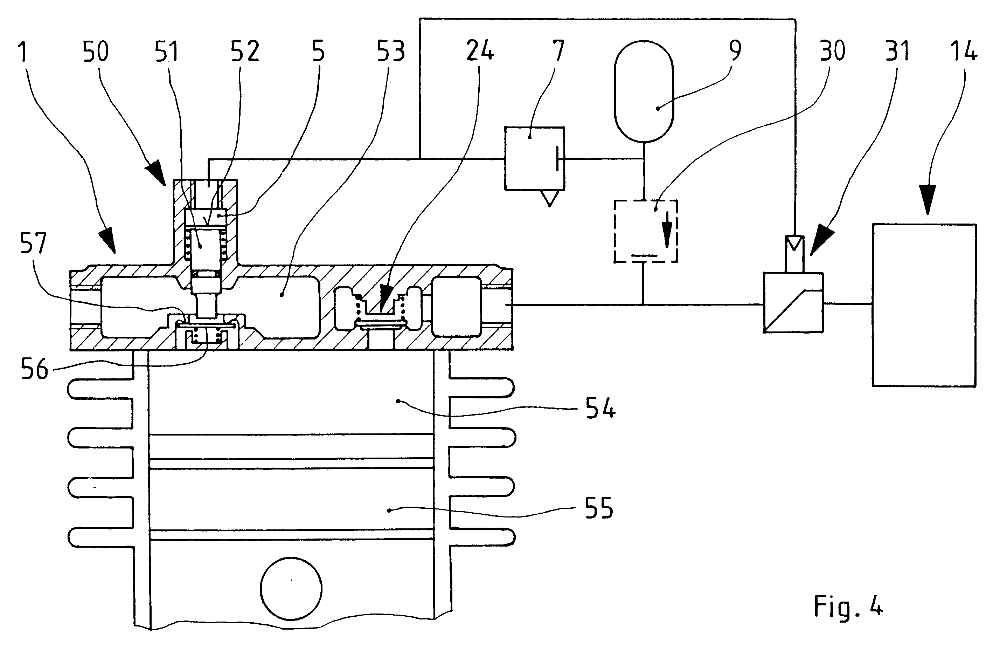

In dem Ausführungsbeispiel nach Fig.4 ist die mit (50) bezeichnete Abschalteinrichtung in den Druckerzeuger (1) integriert. die Abschalteinrichtung (50) stellt hier eine druckabhängige Öffnungseinrichtung für das Einlaßventil (56, 57) des Druckerzeugers (1) dar. Zu diesem Zweck weist sie ein Stellglied (51) auf, welches mit seinem einen Ende das Ventilglied (56) des Einlaßventils (56, 57) des Druckerzeugers (1) in dessen Öffnungsrichtung, d.h. in der Figur abwärts, bewegen kann. An seinem anderen Ende weist das Stellglied (51) eine die Schaltkammer (5) begrenzende Kolbenfläche (52) auf, auf der es von dem in der Schaltkammer (5) herrschenden Druck in Öffnungsrichtung des Einlaßventils (56, 57) beaufschlagt ist. In Schließrichtung des Einlaßventils (56, 57), d.h. in der Figur aufwärts, ist das Stellglied (51) von einer nicht näher bezeichneten Feder vorgespannt.

In diesem Fall werden beim Öffnen der Govenorventileinrichtung (7) durch den Druck (vom Wert des Hochdrucks) in der Schaltkammer (5) mittels des Stellglieds (51) das Einlaßventil (56, 57) des Druckerzeugers (1) aufgestoßen, dadurch dessen Verdichtungsraum (54) oberhalb des Kolbens (55) mit dessen Saugraum (53) verbunden und dadurch der Druckerzeuger (1) abgeschaltet.

Das Auslaßventil des Druckerzeugers (1) bildet in diesem Falle zugleich das Rückschlagventil (24).

Abschalteinrichtungen dieser Art, die sich des Einlaßventils des Druckerzeugers bedienen, sind in sehr unterschiedlichen Ausgestaltungen gebäuchlich. Nur beispielhaft sei auf die Ausgestaltungen mit schwenkbaren bzw. verschiebbaren Lamellen als Ventilkörper nach der DE 39 04 172 A1 hingewiesen.

Auch die Druckbegrenzungsventileinrichtung (63) des Ausführungsbeispiels nach Fig.5 entspricht in ihrem Grundaufbau und ihrer Grundfunktion der bekannten Bauart. Die Schließeinrichtung (64) ist jedoch in diesem Fall eine an den Ausgang des Druckerzeugers (1) angeschlossene druckabhängige Schließeinrichtung. Konstruktiv wird dies beim Ausführungsbeispiel dadurch sichergestellt, daß an dem Kolbenglied eine dessen Kolbenfläche (20) entgegengerichtete Stufenfläche (61) vorgesehen ist, die eine an den Ausgang des Druckerzeugers (1) angeschlossene Kammer (62) begrenzt. Auf der Stufenfläche (61) ist das Kolbenglied also in Richtung der Kraft der Regelfeder, d.h. in Öffnungsrichtung des Einlaßventils, beaufschlagt. Der die Kolbenfläche (20) in Schließrichtung des Einlaßventils beaufschlagende Ausgangsdruck muß also zum Schließen des Einlaßventils neben der Kraft der Regelfeder auch die auf der Stufenfläche (61) lastende Druckkraft überwinden.

Steigt infolge des "schleichenden Schließens" der Druckbegrenzungsventileinrichtung (63) der Druck im Hochdruckteil (9) auf den Wert des Hochdrucks an, so wird der Druckerzeuger (1) durch die schematisch dargestellte Abschalteinrichtung (60) abgeschaltet, wodurch der Förderdruck am Ausgang des Druckerzeugers (1) vergleichsweise schlagartig im wesentlichen auf den Umgebungsdruck fällt. Mit dem Druck am Ausgang des Druckerzeugers fällt der Druck in der Kammer (62). Das Kolbenglied der Druckbegrenzungsventileinrichtung (63) wird dadurch vergleichsweise schlagartig von der durch die Stufenfläche (61) erzeugten Kraftkomponente in Öffnungsrichtung entlastet. Durch den dadurch vergleichsweise schlagartig eintretenden Kraftüberschuß des Drucks auf der Kolbenfläche (20) wird das Einlaßventil sofort und sicher geschlossen.

Auf Einzelheiten der Ausbildung der Abschalteinrichtung (60) kommt es in diesem Falle nicht an. Diese muß eine irgendwie geartete Einrichtung zur Herabsetzung des Förderdrucks des Lufterzeugers (1) im wesentlichen auf den Wert des Umgebungsdrucks beim Auftreten des Hochdrucks im Hochdruckteil (9) sein. Derartige Einrichtungen sind in vielerlei Ausgestaltungen bekannt. Beispielsweise könnten auch insoweit die Druckregeleinrichtungen bzw. Druckregler der früheren Ausführungsbeispiele eingesetzt werden. In diesem Falle müßte die Kammer (62) an den Eingang (2) der Abschalteinrichtung (4) bzw. an den Eingang des Druckreglers bzw. des Lufttrockners (40) bzw. dem Ausgang des Druckerzeugers (1) angeschlossen werden.

Es versteht sich, daß die Größe der Stufenflächen (23 bzw. 61) bzw. der Kolbenfläche (33) des Ventilkörpers (35) der Ausführungsbeispiele so zu bemessen ist, daß die Spanne zwischen dem Schließdruck und dem Öffnungsdruck der jeweiligen Druckbegrenzungsventileinrichtung (11 bzw. 31 bzw. 63) nicht unzulässig groß ist mit der Folge zu geringen Mindestdrucks im Niederdruckteil (14). Dies bedeutet im Normalfall, daß diese Flächen im Verhältnis zu der Kolbenfläche (20) des Kolbenglieds der Druckbegrenzungsventileinrichtung (11 bzw. 31 bzw. 63) klein anzulegen sind.

Im übrigen gelten, soweit sich aus dem Vorstehenden nichts anderes ergibt, die für ein Ausführungsbeispiel gemachten Ausführungen für jedes andere Ausführungsbeispiel direkt oder indirekt in entsprechender Anwendung mit.

Der Fachmann erkennt, daß sich der Schutzbereich der vorliegenden Erfindung nicht in den Ausführungsbeispielen erschöpft, sondern alle Ausgestaltungen umfaßt, deren Merkmale sich den Patentansprüchen unterordnen.

## Patentansprüche

1. Druckluftanlage mit einem Hochdruckteil (9), einem Niederdruckteil (14) und einem Druckerzeuger (1), mit den Merkmalen:
a) dem Druckerzeuger (1) ist eine eine Schaltkammer (5) enthaltende Abschalteinrichtung (4; 50) zu dessen Abschaltung bei Auftreten des Hochdrucks im Hochdruckteil (9) zugeordnet;
b) an den Hochdruckteil (9) ist der Eingang (8) einer auf den Wert des Hochdrucks eingestellten Govenorventileinrichtung (7) angeschlossen, deren Ausgang (6) an die Schaltkammer (5) angeschlossen ist;
c) an den Druckerzeuger (1) ist der Eingang (22) einer auf den Wert des Niederdrucks eingestellten Druckbegrenzungsventileinrichtung (11; 31) angeschlossen, deren Ausgang (19) an den Niederdruckteil (14) angeschlossen ist,
dadurch gekennzeichnet,
daß die Druckbegrenzungsventileinrichtung (11; 31) eine an die Schaltkammer (5) der Abschalteinrichtung (4) angeschlossene druckbetätigte Schließeinrichtung (10; 32) aufweist, die bei Druckbeaufschlagung in Schließrichtung der Druckbegrenzungsventileinrichtung (11; 31) wirkt.

2. Druckluftanlage nach Anspruch 1, dadurch gekennzeichnet, daß die Abschalteinrichtung (4) und die Govenorventileinrichtung (7) zu einem Druckregler zusammengefaßt sind.

3. Druckluftanlage nach Anspruch 1, die in der Verbindung zwischen dem Druckerzeuger (1) und den genannten Anlagenteilen (9, 14) einen Lufttrockner (40) aufweist, dadurch gekennzeichnet, daß die Abschalteinrichtung (4) und/oder die Govenorventileinrichtung (7) in den Lufttrockner (40) integriert sind.

4. Druckluftanlage nach einem der vorhergehenden Ansprüche, worin die Abschalteinrichtung (4) in der Verbindung zwischen dem Druckerzeuger (1) und den genannten Anlagenteilen (9, 14) angeordnet ist, dadurch gekennzeichnet, daß in der Verbindung zwischen dem Ausgang (25) der Abschalteinrichtung (4) und dem Hochdruckteil (9) ein Überströmventil (30) angeordnet ist.

5. Druckluftanlage nach einem der vorhergehenden Ansprüche, worin die Druckbegrenzungsventileinrichtung (11) ein ihren Eingang (22) mit ihrem Ausgang (19) verbindendes Einlaßventil und ein dieses betätigendes, in Öffnungsrichtung des Einlaßventils von einer Regelfeder und in Gegenrichtung auf einer Kolbenfläche (20) vom Ausgangsdruck beaufschlagtes Kolbenglied (21) aufweist, dadurch gekennzeichnet, daß die Schließeinrichtung (10) aus einer der Kolbenfläche (20) gleichgerichteten Stufenfläche (23) des Kolbenglieds (21) und einer von dieser begrenzten, mit der Schaltkammer (5) der Abschalteinrichtung (4) verbundenen, Kammer (12) besteht.

6. Druckluftanlage nach einem der vorhergehenden Ansprüche, worin die Druckbegrenzungsventileinrichtung (31) ein ihren Eingang mit ihrem Ausgang verbindendes Einlaßventil mit einem Ventilkörper (35) und ein mit diesem zusammenwirkendes, in Öffnungsrichtung des Einlaßventils von einer Regelfeder und in Gegenrichtung auf einer Kolbenfläche (20) vom Ausgangsdruck beaufschlagtes Kolbenglied aufweist, dadurch gekennzeichnet, daß die Schließeinrichtung (32) aus einer an dem dem Kolbenglied abgewandten Ende des Ventilkörpers (35) ausgebildeten, der Kolbenfläche (20) des Kolbenglieds gleichgerichteten Kolbenfläche (33) und einer von dieser begrenzten, mit der Schaltkammer (5) der Abschalteinrichtung (4) verbundenen Kammer (34) besteht.

7. Druckluftanlage mit einem Hochdruckteil (9), einem Niederdruckteil (14) und einem Druckerzeuger (1), mit den Merkmalen:
a) dem Druckerzeuger (1) ist eine Abschalteinrichtung (50) zu dessen Abschaltung beim Auftreten des Hochdrucks im Hochdruckteil (9) zugeordnet;
b) an den Druckerzeuger (1) ist der Eingang einer auf den Wert des Niederdrucks eingestellten Druckbegrenzungsventileinrichtung (63) angeschlossen, deren Ausgang an den Niederdruckteil (14) angeschlossen ist,
dadurch gekennzeichnet,
daß die Druckbegrenzungsventileinrichtung (63) eine an den Ausgang des Druckerzeugers (1) angeschlossene druckabhängige Schließeinrichtung (64) aufweist, die bei Druckbeaufschlagung in Öffnungsrichtung der Druckbegrenzungsventileinrichtung (63) wirkt.

## Claims

1. A compressed air system having a high pressure part (9), a low pressure part (14) and a pressure generator (1), having the features:
(a) a trip device (4; 50) containing an interrupter chamber (5) is associated with the pressure generator (1) for the purpose of cutting this off on occurrence of high pressure in the high pressure part (9);
(b) the input (8) of a governor valve device (7) set to the value of the high pressure is connected to the high pressure part (9), and the output (6) thereof is connected to the interrupter chamber (5);
(c) the input (22) of a pressure-limiting valve device (11; 31) set to the value of the low pressure is connected to the pressure generator (1), and the output (19) thereof is connected to the low pressure part (14);
characterized in that
the pressure-limiting valve device (11; 31) has a pressure-operated closure means (10; 32) connected to the interrupter chamber (5) of the trip device (4), which closure means, on being pressurized, is effective in the closing direction of the pressure-limiting valve device (11; 31).

2. A compressed air system according to claim 1, characterized in that the trip device (4) and the governor valve device (7) are combined to form a pressure regulator.

3. A compressed air system according to claim 1, which in the connection between the pressure generator (1) and the said system parts (9, 14) has an air drier (40), characterized in that the trip device (4) and/or the governor valve device (7) are integrated in the air drier (40).

4. A compressed air system according to one of the preceding claims, in which the trip device (4) is arranged in the connection between the pressure generator (1 ) and the said system parts (9, 14), characterized in that an overflow valve (30) is arranged in the connection between the output (25) of the trip device (4) and the high pressure part (9).

5. A compressed air system according to one of the preceding claims, in which the pressure-limiting valve device (11) has an inlet valve connecting its input (22) to its output (19), and a piston member (21) operating this inlet valve and pressurized in the opening direction of the inlet valve by a control spring and pressurized in the opposite direction on a piston face (20) by the output pressure, characterized in that the closure means (10) consists of a step face (23) of the piston member (21) facing the same way as the piston face (20), and of a chamber (12) bounded by this step face and connected to the interrupter chamber (5) of the trip device (4).

6. A compressed air system according to one of the preceding claims, in which the pressure-limiting valve device (31) has an inlet valve with a valve body (35) connecting its inlet to its output and, co-operating with this valve body, a piston member pressurized in the opening direction of the inlet valve by a control spring and pressurized in the opposite direction on a piston face (20) by the output pressure, characterized in that the closure means (32) consists of a piston face (33) facing the same way as the piston face (20) of the piston member and formed at the end of the valve body (35) remote from the piston member, and of a chamber (34) bounded by this piston face (33) and connected to the interrupter chamber (5) of the trip device (4).

7. A compressed air system having a high pressure part (9), a low pressure part (14) and a pressure generator (1), having the features:
(a) a trip device (50) is associated with the pressure generator (1) for the purpose of cutting this off on occurrence of high pressure in the high pressure part (9);
(b) the input of a pressure-limiting valve device (63) set to the value of the low pressure is connected to the pressure generator (1), and the output thereof is connected to the low pressure part (14);
characterized in that
the pressure-limiting valve device (63) has a pressure-dependent closure means (64) connected to the output of the pressure generator (1), which closure means, on being pressurized, is effective in the closing direction of the pressure-limiting valve device (63).

## Revendications

1. Installation à air comprimé possédant une partie haute pression (9), une partie basse pression (14) et un générateur de pression (1), et qui présente les particularités:
a) un dispositif d'arrêt (4; 50), contenant une chambre de commande (5), est coordonné au générateur de pression (1) en vue de son arrêt à l'apparition de la haute pression dans la partie haute pression (9);
b) un dispositif de soupape de réglage (7), ajusté à la valeur désirée de la haute pression, est raccordé par son entrée (8) à la partie haute pression (9) et par sa sortie (6) à la chambre de commande (5); et
c) un dispositif de soupape limitatrice de pression (11; 31), ajusté à la valeur désirée de la basse pression, est raccordé par son entrée (22) au générateur de pression (1) et par sa sortie (19) à la partie basse pression,
caractérisée en ce que
le dispositif de soupape limitatrice de pression (11; 31) comporte un dispositif de fermeture (10; 32) commandé par la pression et raccordé à la chambre de commande (5) du dispositif d'arrêt (4), dispositif de fermeture qui, lorsqu'il est soumis à une pression, agit dans le sens de la fermeture du dispositif de soupape limitatrice de pression (11; 31).

2. Installation à air comprimé selon la revendication 1, caractérisée en ce que le dispositif d'arrêt (4) et le dispositif de soupape de réglage (7) sont rassemblés en un régulateur de pression.

3. Installation à air comprimé selon la revendication 1 et comportant un dessiccateur d'air (40) dans la liaison entre le générateur de pression (1) et les parties d'installation (9, 14) mentionnées, caractérisée en ce que le dispositif d'arrêt (4) et/ou le dispositif de soupape de réglage (7) est ou sont intégré(s) dans le dessiccateur d'air (40).

4. Installation à air comprimé selon une des revendications précédentes et dans laquelle le dispositif d'arrêt (4) est agencé dans la liaison entre le générateur de pression (1) et les parties d'installation (9, 14) mentionnées, caractérisée en ce qu'une soupape de débordement (30) est incorporée dans la liaison entre la sortie (25) du dispositif d'arrêt (4) et la partie haute pression (9).

5. Installation à air comprimé selon une des revendications précédentes et dans laquelle le dispositif de soupape limitatrice de pression (11) comporte une soupape d'admission reliant son entrée (22) à sa sortie (19) et un élément formant piston (21), actionnant cette soupape, qui est sollicité dans le sens de l'ouverture de la soupape d'admission par un ressort de réglage et en sens contraire par la pression de sortie appliquée à une face de piston (20), caractérisée en ce que le dispositif de fermeture (10) est constitué d'une face de gradin (23) de l'élément formant piston (21), face qui est dirigée dans le même sens que la face de piston (20), et d'une chambre (12) délimitée par cette face de gradin et reliée à la chambre de commande (5) du dispositif d'arrêt (4).

6. Installation à air comprimé selon une des revendications précédentes et dans laquelle le dispositif de soupape limitatrice de pression (31) comporte une soupape d'admission qui relie son entrée à sa sortie et posséde un obturateur (35) et un élément formant piston coopérant avec cet obturateur, élément qui est sollicité dans le sens de l'ouverture de la soupape d'admission par un ressort de réglage et en sens contraire par la pression de sortie, appliquée une face de piston (20), caractérisée en ce que le dispositif de fermeture (32) est constitué d'une face de piston (33) réalisée à l'extrémité de l'obturateur (35) opposée à l'élément formant piston, face qui est dirigée dans le même sens que la face de piston (20) de l'élément formant piston, ainsi que d'une chambre (34) délimitée par cette face de piston (33) et reliée à la chambre de commande (5) du dispositif d'arrêt (4).

7. Installation à air comprimé possédant une partie haute pression (9), une partie basse pression (14) et un générateur de pression (1), et qui présente les particularités:
a) un dispositif d'arrêt (50) est coordonné au générateur de pression (1) en vue de l'arrêt de ce générateur à l'apparition de la haute pression dans la partie haute pression (9); et
b) un dispositif de soupape limitatrice de pression (63), ajusté à la valeur désirée de la basse pression, est raccordé par son entrée au générateur de pression (1) et par sa sortie à la partie basse pression (14),
caractérisée en ce que
le dispositif de soupape limitatrice de pression (63) comporte un dispositif de fermeture (64) agissant en fonction de la pression et raccordé à la sortie du générateur de pression (1), dispositif de fermeture qui, lorsqu'il est sollicité par une pression, agit dans le sens de l'ouverture du dispositif de soupape limitatrice de pression (63).
